# DEMANDE DE BREVET EUROPEEN

(11) **EP 2 677 371 A1**
(43) Date de publication de la demande: **25.12.2013**
(21) Numéro de dépôt: 12173045.1
(22) Date de dépôt: 21.06.2012
(51) Int. Cl.: G04B 31/04

(54) **Systeme antichoc non demontable pour pièce d'horlogerie**

(71) Demandeur: ETA SA Manufacture Horlogère Suisse, 2540 Grenchen (CH)
(72) Inventeur: Girardin, Yvan, 2852 Courtételle (CH); Villar, Ivan, 2504 Bienne (CH)
(74) Mandataire: Ravenel, Thierry Gérard Louis

(57) **Abrégé**

La présente invention concerne un palier amortisseur de chocs (100) pour un axe d'un mobile d'une pièce d'horlogerie, ledit palier comportant un support (200) pourvu d'un logement (206) prévu pour recevoir un module pivot (400) agencé pour coopérer avec ledit axe, ledit palier comprenant en outre des moyens élastiques (300) agencés pour exercer sur ledit module pivot au moins une force axiale pour maintenir ledit module dans son logement.

## Description

La présente invention concerne un palier amortisseur de chocs pour un axe d'un mobile d'une pièce d'horlogerie. L'axe comprend un tigeron, comportant un support, ledit support étant pourvu d'un logement prévu pour recevoir un système pivot dans lequel le tigeron est inséré. Le palier amortisseur de chocs comprend en outre des moyens élastiques agencés pour exercer sur ledit système pivot au moins une force axiale pour maintenir ledit module pivot dans le logement.

Le domaine technique de l'invention est le domaine technique de la mécanique fine

### ARRIERE PLAN TECHNOLOGIQUE

La présente invention concerne des paliers pour pièces d'horlogerie, plus particulièrement du type permettant d'amortir les chocs. Les constructeurs de montres mécaniques ont conçu depuis longtemps de nombreux dispositifs permettant à un axe d'absorber l'énergie résultant d'un choc, notamment d'un choc latéral, par butée contre une paroi du trou du bloc de base qu'il traverse, tout en permettant un déplacement momentané du tigeron avant qu'il ne soit ramené à sa position de repos sous l'action d'un ressort.

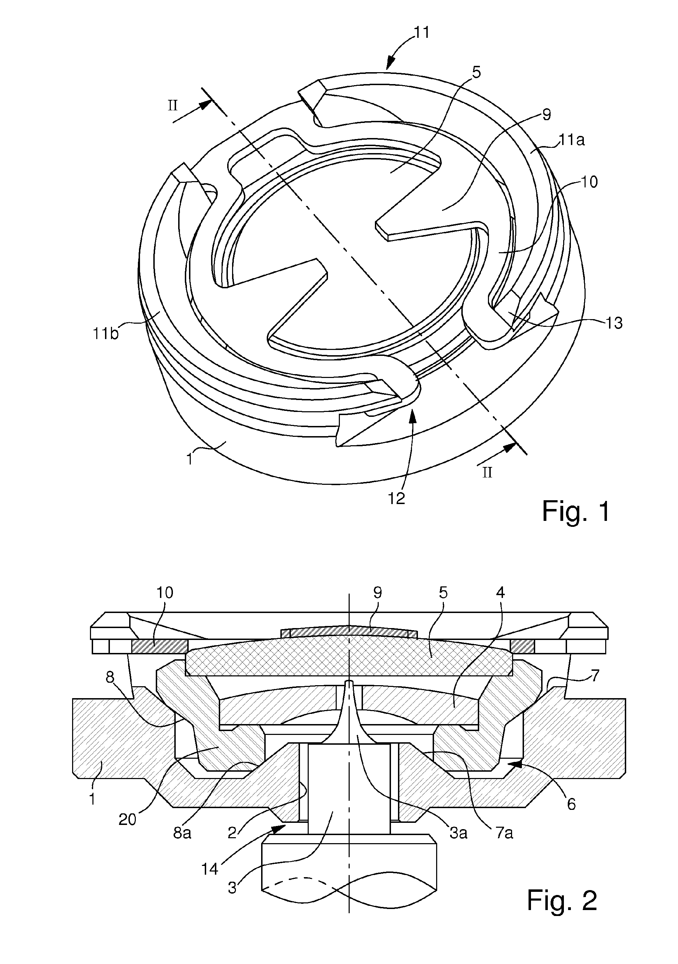

Les figures 1 et 2 illustrent un dispositif dit à double cône inversé qui est actuellement utilisé dans des pièces d'horlogerie se trouvant sur le marché.

Un support 1, dont la base comporte un trou 2 pour le passage de l'axe de balancier 3 terminé par un tigeron 3a, permet de positionner un chaton 20 dans lequel sont immobilisées une pierre percée 4 traversée par le tigeron 3a et une pierre contre-pivot 5. Le chaton 20 est maintenu dans un logement 6 du support 1 par un ressort 10 qui comprend dans cet exemple des extensions radiales 9 comprimant la pierre contre-pivot 5. Le logement 6 comporte deux portées 7, 7a en forme de cônes inversés sur lesquelles prennent appui des portées complémentaires 8, 8a du chaton 20, lesdites portées devant être exécutées avec une très grande précision. En cas de choc axial, la pierre percée 4, la pierre contre-pivot 5 et l'axe du balancier se déplacent et le ressort 10 agit seul pour ramener l'axe de balancier 3 dans sa position initiale. Le ressort 10 est dimensionné pour avoir une limite de déplacement de sorte qu'au-delà de cette limite, l'axe de balancier 3 arrive en contact avec des butées 14 permettant audit axe 3 d'absorber le choc, ce que les tigerons 3a de l'axe 3 ne peuvent faire sous peine de casser. En cas de choc latéral, c'est-à-dire lorsque l'extrémité du tigeron déséquilibre le chaton 20 hors de son plan de repos, le ressort 10 coopère avec les plans inclinés complémentaires 7, 7a ; 8, 8a pour recentrer le chaton 20. De tels paliers ont par exemple été vendus sous la marque Incabloc®. Ces ressorts peuvent être réalisés en phynox ou laiton et sont fabriqués par des moyens traditionnels de découpage.

Or, un inconvénient de ces paliers amortisseurs de chocs est qu'ils sont démontables. En effet, il est prévu que ces paliers amortisseurs de chocs puissent être démontables pour les opérations de service après ventre et d'entretien. On obtient donc des paliers amortisseurs de chocs dont le montage n'est pas aisé. Effectivement, certaines pièces comme le support 1 et le ressort 10 doivent être orientées et manipulées d'une certaine façon lors de l'opération de montage pour assembler le palier amortisseur. Par conséquent, non seulement les pièces constitutives du palier amortisseur de chocs sont complexes ais en plus, l'automatisation totale de l'assemblage n'est pas possible et rend ledit palier amortisseur de chocs plus coûteux.

### RESUME DE L'INVENTION

L'invention a pour but de pallier les inconvénients de l'art antérieur en proposant de fournir un palier amortisseur de chcos non démontable de pièce d'horlogerie et simple à monter.

A cet effet, l'invention concerne un palier amortisseur de chocs pour un axe d'un mobile d'une pièce d'horlogerie, ledit palier comportant un support pourvu d'un logement prévu pour recevoir un module pivot agencé pour coopérer avec ledit axe, ledit palier comprenant en outre des moyens élastiques agencés pour exercer sur ledit module pivot au moins une force axiale pour maintenir ledit module dans son logement, **caractérisé en ce que** les moyens élastiques sont fixés au support de manière permanente par un lien matériel entre lesdits moyens élastiques et le support. Un premier avantage de la présente invention est de permettre d'avoir un système antichoc non démontable simple à réaliser et à assembler. En effet, la présente invention à l'avantage d'avoir des pièces qui se placent les unes sur les autres sans qu'elles doivent être manipulées d'une façon particulières. Ainsi, le procédé d'assemblage peut être automatisé. Cette simplicité des pièces et du procédé d'assemblage permet d'avoir un amortisseur de chocs bon marché.

Dans un premier mode de réalisation avantageux, les moyens élastiques sont fixés sur le support par soudage/brasage.

Dans un second mode de réalisation avantageux, les moyens élastiques sont fixés sur le support par collage.

Dans un troisième mode de réalisation avantageux, les moyens élastiques comprennent un anneau ressort présentant au moins une extension radiale interne s'étendant vers le centre dudit anneau ressort.

Dans un autre mode de réalisation avantageux, ledit anneau ressort comprend au moins deux zones spécifiques d'attaches pour fixer ledit anneau ressort au support.

Dans un autre mode de réalisation avantageux, ledit anneau ressort comprend au moins deux extension radiale externe s'étendant vers l'extérieur dudit anneau ressort servant de zones spécifiques d'attaches.

Dans un autre mode de réalisation avantageux, l'anneau ressort comprend trois extensions radiales externes et trois extensions radiales internes.

La présente invention concerne également un mouvement horloger comprenant une platine et au moins un pont, ladite platine comprenant un orifice. Dans ledit orifice de ladite platine est inséré un palier amortisseur de chocs selon l'invention.

La présente invention concerne également un mouvement horloger comprenant une platine et au moins un pont, ledit au moins un pont comprenant un orifice. Dans ledit orifice dudit au moins un pont est inséré un palier amortisseur de chocs selon l"invention

Dans un mode de réalisation avantageux, le support du palier amortisseur et ladite platine sont monoblocs.

Dans un mode de réalisation avantageux, le support du palier amortisseur et ledit au moins un pont sont monoblocs.

L'invention concerne également une pièce d'horlogerie comprenant une carrure fermée par une boite et un fond la pièce d'horlogerie comprend un mouvement horloger selon l'invention.

### BREVE DESCRIPTION DES FIGURES

Les buts, avantages et caractéristiques du palier amortisseur de chocs selon la présente invention apparaîtront plus clairement dans la description détaillée suivante d'au moins une forme de réalisation de l'invention donnée uniquement à titre d'exemple non limitatif et illustrée par les dessins annexés sur lesquels :
- les figures 1 et 2, déjà citées, permettent de représenter de manière schématique un système amortisseur de chocs de pièce d'horlogerie selon l'art antérieur;
- la figure 3 représente de manière schématique un système amortisseur de chocs de pièce d'horlogerie selon l'invention.
- la figure 4 représente de manière schématique une vue de dessus d'un ressort pour le système amortisseur de chocs de pièce d'horlogerie selon l'invention.
- les figures 5 et 6 représentent de manière schématique différentes vues d'un mode de réalisation préféré d'un ressort pour le système amortisseur de chocs de pièce d'horlogerie selon l'invention.
- les figures 7 à 9 représentent de manière schématique différentes variantes pour le module pivot du système amortisseur de chocs de pièce d'horlogerie selon l'invention ; et
- La figure 10 représente de manière schématique une variante monobloc du système amortisseur de chocs de pièce d'horlogerie selon l'invention.

### DESCRIPTION DETAILLEE

La présente invention procède de l'idée générale inventive qui consiste à procurer un système amortisseur de chocs non démontable simple. Ce système amortisseur de chocs est agencé pour être monté sur une platine et/ou au moins un pont d'un mouvement horloger. Le mouvement horloger est placé dans une pièce d'horlogerie comprenant une carrure fermée par un fond et une glace.

Sur la figue 3 est représenté un palier amortisseur de chocs encore appelé système antichoc 100. Ce palier amortisseur de chocs 100 comprend un support 200. Ce support 200 se présente sous la forme d'une base 201, pourvu d'un trou 202, de laquelle s'étend un rebord périphérique 203. Ce dernier présente un flanc externe 204 et un flanc interne 205. Ce rebord 203 permet de définir un logement 206 dans lequel un module pivot 400 est inséré. Ce module pivot 400 classique comprend un chaton 401 c'est-à-dire une pièce présentant un orifice central circulaire et une paroi externe et une paroi interne. Dans la paroi interne est insérée une pierre percée 402 dont le diamètre correspond à celui de l'orifice central. La paroi interne comprend un épaulement de sorte qu'une pierre contre-pivot 403 puisse être fixée. Le module pivot 400 est alors placé dans le logement 206 du support 200 et coopère avec le tigeron d'un axe. De préférence, le support 200, le logement 206 et le module pivot 400 sont de forme circulaire.

Le palier amortisseur de chocs 100 comprend en outre des moyens élastiques 300 qui sont agencés pour coopérer avec le module pivot 400 de sorte à amortir les chocs et à ramener le module pivot 400 dans sa position de repos lorsque la contrainte liée aux chocs s'estompe.

Avantageusement selon l'invention, les moyens élastiques 300 sont fixés de sorte à être solidaire du support 200. On comprend par-là que les moyens élastiques 300, une fois fixés au support 200, ne peuvent plus être séparés, désolidarisés du support. Les moyens élastiques 300 sont fixés de manière permanente au support 200. La fixation des moyens élastiques 300 au support 200 est donc définitive. Pour ce faire, les moyens élastiques 300 sont fixés sur le support 200 par soudage ou brasage ou collage. II existe alors un lien matériel entre les moyens élastiques 300 et le support 200. Ce lien peut être de la colle ou une brasure ou soudure. Les moyens élastiques 300 forment un couvercle posé sur le support qui maintient le module pivot 400 dans le logement 206, le système antichoc 100 devenant ainsi non démontable.

Cette fixation au support 200 se fait au niveau du rebord 203. Le rebord 203 présente à son extrémité 207, une surface 207a faisant office de surface d'appui sur laquelle les moyens élastiques 300 peuvent être fixés. Le flanc externe 204 du support 200 peut également faire office de surface sur laquelle les moyens élastiques 300 sont fixés.

L'avantage d'une telle caractéristique est de permettre d'avoir un palier amortisseur de chocs 100 simplifié car il n'y a plus la contrainte d'être démontable et donc les formes peuvent être plus simples.

Lors de l'assemblage du système antichoc 100, on utilise un montage axial. La premier étape consiste donc à se munir du support 200. Puis, on se munit du module pivot 400 qui est placé dans le logement 206 du support 200. On vient, ensuite, placer et fixer les moyens élastiques 300. Dans le cas de moyens élastiques 300 fixés à l'extrémité 207 du support 200 faisant office de surface d'appui 207a, les moyens élastiques 300 sont simplement posés sur le support 200. Des points de colle ou de soudure sont alors appliqués pour fixer lesdits moyens élastiques 300.

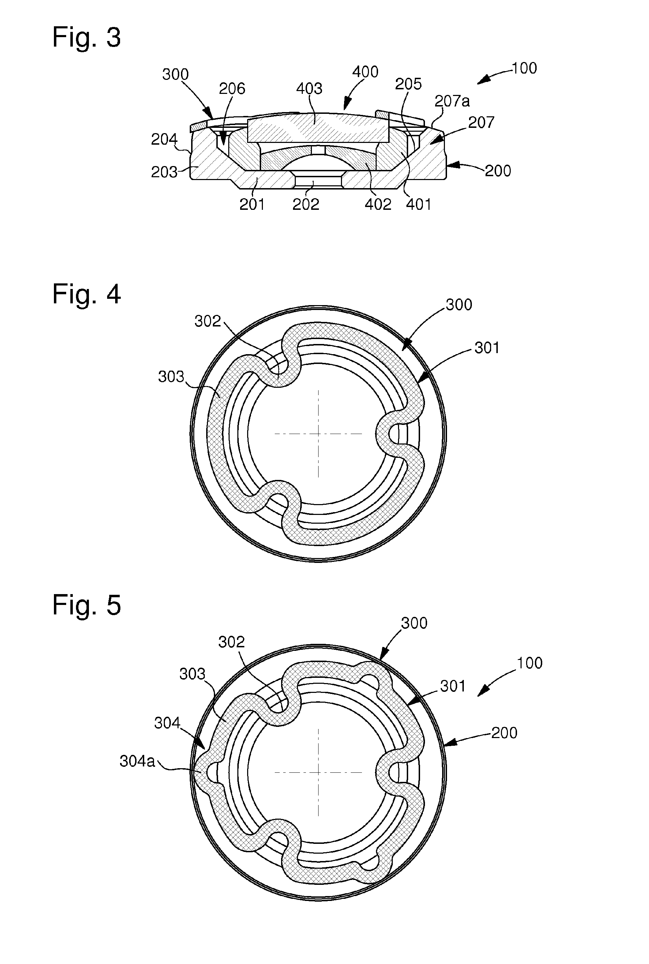

Dans un exemple de réalisation des moyens élastiques, les moyens élastiques 300 se présentent sous la forme d'un anneau ressort 301. Cet anneau ressort 301 est du type plat c'est-à-dire qu'il est constitué d'une bande métallique c'est à dire qui présente une largeur plus grande que l'épaisseur. Pour plaquer ledit module pivot 400 dans le logement 206 du support 200, l'anneau ressort 301 comprend des extensions radiales internes 302. Ces extensions radiales internes 302 sont constituées par la bande formant l'anneau 301 qui est recourbée vers l'intérieur de l'anneau 301. Ces extensions radiales internes 301 sont, de préférence, régulièrement réparties sur l'anneau plat 301 de sorte que l'anneau ressort 301 puisse agir de façon homogène comme visible à la figure 4. La fixation de l'anneau ressort 301 au support 200 se fait au niveau des portions circulaires 303 situées entre les extensions radiales internes 302. L'anneau ressort 301 peut être réalisé en un matériau métallique tel que le laiton ou tout autre matériau utilisable dans les applications horlogères.

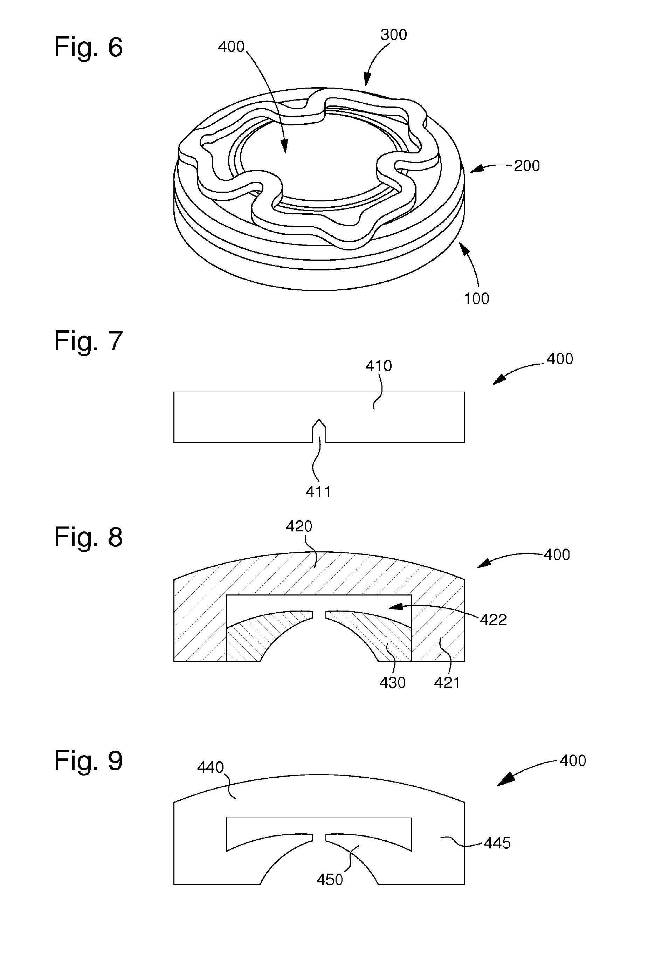

Dans une première variante avantageuse, l'anneau ressort 301 comprend des zones spécifiques d'attaches 304 comme visible aux figures 5 et 6. En effet, dans le cas de l'anneau ressort 301 visible à la figure 4, la fixation au support 200 par les portions circulaires 303 peut entraîner une modification des propriétés de l'anneau ressort 301.

Or, les zones spécifiques d'attaches 304 sont des zones agencées pour limiter l'influence de la fixation par soudure ou collage sur les propriétés dudit anneau ressort 301. Ces zones se présentent sous la forme d'extensions radiales externes 304a s'étendant vers l'extérieur de l'anneau 301. On comprend donc que ces zones spécifiques d'attaches 304 sont constituées par la bande formant l'anneau 301 qui est recourbée vers l'extérieur de l'anneau 301. De préférence, la courbure des extensions radiales externes 304a est moins prononcée que celles des extensions radiales internes 302. On comprend par la que la distance entre l'extrémités des extensions radiales externes 304a et la bande formant l'anneau 301 est plus importante que la distance entre l'extrémités des extensions radiales internes 302 et ladite bande formant l'anneau 301. L'anneau ressort 301 selon cette variante est avantageusement dimensionné de sorte que, lors de la fixation dudit anneau 301 au support 200, seules les zones spécifiques d'attaches 304 formées par les extensions radiales externes 304a sont en contact avec le support 200 permettant la fixation. Cette configuration permet aux zones autres que ces zones spécifiques d'attaches 304 de se déformer librement lorsqu'une contrainte axiale est appliquée sur le module pivot 400 par l'axe.

De préférence, l'anneau ressort 301 est agencé pour présenter trois extensions radiales internes 302 et trois zones spécifiques d'attaches 304 c'est-à-dire trois extensions radiales externes 304a. Les trois extensions radiales internes 302 sont agencées pour être décalées l'une de l'autre de 120°. Les trois extensions radiales externes 304a sont agencées pour être décalées l'une de l'autre de 120°. L'agencement des extensions radiales externes 304a et des extensions radiales internes 302 est réalisé de sorte que les extensions radiales externes 304a et les extensions radiales internes 302 sont alternées et décalées de 60° l'une de l'autre. On comprend qu'entre deux extensions radiales externes 304a se trouve une extension radiale interne 302.

L'avantage du palier amortisseur de chocs 100 est de ne présenter aucune orientation spécifique. En effet, comme toutes les pièces constitutives dudit système antichoc 100 sont circulaires, il n'y a pas besoin de les orienter les unes par rapport aux autres. Le support 200 ne présente pas de zones particulières sur lesquelles l'anneau ressort 301 doit être fixé. De cette façon, le procédé d'assemblage d'un tel système antichoc 100 peut être automatisé au maximum.

Dans une seconde variante, le flanc interne 205 présente une portion inclinée permettant un meilleur centrage du module pivot 400. En effet, lors d'un choc axial, l'axe exerce une force axiale sur le module pivot 400 de sorte que celui-ci se soulève et déforme les moyens élastiques 300. Ces moyens élastiques 300 retiennent le module pivot 400 pour que, quand celui-ci n'est plus soumis à une contrainte, les moyens élastiques 300 reprennent leur position de repos et plaquent le module pivot 400 dans le logement 206. Or, lorsque le module pivot 400 est soulevé du logement 206 par l'axe, il est possible que le module pivot 400 se désaxe sous l'effet d'une force telle que la gravité et se déplace radialement,. Dans ce cas, lorsque le module pivot 400 reprend sa position dans le logement 206, le module pivot 400 va entrer en contact avec la portion inclinée du flanc interne 205. Cette portion incliné 205 guide le module pivot 400 vers sa position initiale, c'est-à-dire sa position de repos de sorte que le module pivot 400 soit parfaitement centré.

Dans une troisième variante, le module pivot 400 se présente sous la forme monobloc.

Dans une première alternative visible à la figure 7, le module pivot 400 comprend une seule pierre 410. Cette unique pierre 410 est de forme cylindrique présentant une faible hauteur par rapport au rayon. Cette unique pierre 410 comprend, au niveau de son axe central, un trou borgne 411 dans lequel le tigeron de l'axe peut s'insérer. Cette configuration à une seule pierre 410 permet d'avoir un module pivot 400 plus compact et simplifié car il permet d'avoir un système antichoc 100 composé de seulement trois pièces : le support 200, la pierre unique 410 et l'anneau ressort 301. Par conséquent, les dimensions du support 200 peuvent être réduites.

Dans une seconde alternative visible à la figure 8, la pierre percée 430 et la pierre contre-pivot 420 sont fixée l'une à l'autre sans l'intermédiaire d'un chaton. Pour cela, la pierre contre-pivot 420 fait office de chaton. La pierre contre-pivot 420 est alors doté d'un rebord périphérique 421 définissant un logement 422 dans lequel la pierre percée 430 est placée. Cette alternative permet d'avoir un module pivot 400 simplifié mais ayant des dimensions similaires à celles d'un module pivot 400 avec chaton. Les dimensions du support restent ainsi inchangées pour s'adapter à cette alternative.

Dans une autre alternative visible à la figure 9, la pierre percée 450 et la pierre contre-pivot 440 sont monoblocs. Le module pivot 400 ressemble au module pivot de la seconde alternative sauf qu'au lieu d'avoir la pierre percée 450 et la pierre contre-pivot 440 fixées l'une à l'autre, elles sont directement solidaires par le biais d'un élément d'attache 445. On cumule ici l'avantage d'avoir une seule pièce tout en gardant des dimensions standards aux modules pivots classiques comportant un chaton dans lequel sont placés une pierre percée et une pierre contre-pivot.

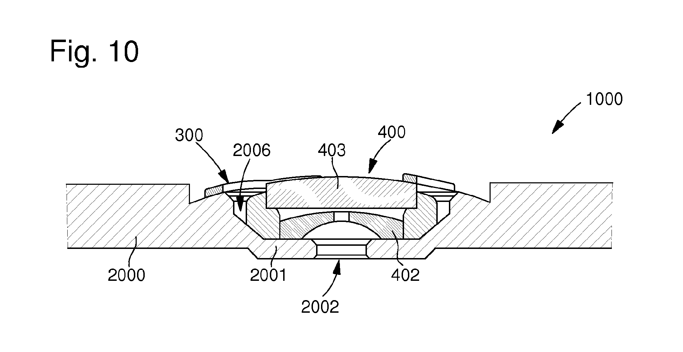

Dans une autre variante visible à la figure 10, le support est monobloc avec l'endroit sur lequel le palier amortisseur de chocs est fixé. En effet, un palier amortisseur de chocs est agencé pour être installé au niveau d'un pont ou d'une platine d'un mouvement horloger. Ce mouvement horloger présente des orifices traversant réalisés sur la platine ou les ponts. Dans ces orifices, un système antichoc 100 sont insérés, chaque orifice étant dimensionné pour que le support 200 puisse y être chassé.

Afin de gagner une étape de montage, le support est directement réalisé sur le ou les ponts et la platine pour former un ensemble amortisseur 1000. La platine et/ou les ponts forment le support 2000 usinés pour laisser apparaitre une base 2001 comprenant un trou 2002. Le support 2000 présente un logement 2006 dans lequel le module pivot 400 est placé. L'anneau ressort 301 est fixée sur la face supérieure du support 2000. Cette variante permet également d'avoir une pièce en moins car le support 200 n'existe plus.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention définie par les revendications annexées.

## Revendications

1. Palier amortisseur de chocs (100) pour un axe d'un mobile d'une pièce d'horlogerie, ledit palier comportant un support (200) pourvu d'un logement (206) prévu pour recevoir un module pivot (400) agencé pour coopérer avec ledit axe, ledit palier comprenant en outre des moyens élastiques (300) agencés pour exercer sur ledit module pivot au moins une force axiale pour maintenir ledit module dans son logement, **caractérisé en ce que** les moyens élastiques (300) sont fixés au support de manière permanente par un lien matériel entre lesdits moyens élastiques et le support.

2. Palier amortisseur de chocs selon la revendication 1, **caractérisé en ce que** les moyens élastiques (300) sont fixés sur le support (200) par soudage ou brasage.

3. Palier amortisseur de chocs selon la revendication 1, **caractérisé en ce que** les moyens élastiques (300) sont fixés sur le support (200) par collage.

4. Palier amortisseur de chocs selon l'une des revendications précédentes, **caractérisé en ce que** les moyens élastiques (300) comprennent un anneau ressort (301) présentant au moins une extension radiale interne (302) s'étendant vers l'axe central dudit anneau ressort.

5. Palier amortisseur de chocs selon l'une des revendications précédentes, **caractérisé en ce que** ledit anneau ressort (301) comprend au moins deux zones spécifiques d'attaches (304) pour fixer ledit anneau ressort au support.

6. Palier amortisseur de chocs selon la revendication 5, **caractérisé en ce que** ledit anneau ressort (301) comprend au moins deux extension radiale externe (304a) s'étendant vers l'extérieur dudit anneau ressort servant de zones spécifiques d'attaches (304).

7. Palier amortisseur de chocs les revendications 4 et 6, **caractérisé en ce que** ledit anneau ressort comprend trois extensions radiales externes (304a) et trois extensions radiales internes (302).

8. Mouvement horloger comprenant une platine (2000) et au moins un pont (2000), ladite platine comprenant un orifice, **caractérisé en ce que** dans ledit orifice de ladite platine est inséré un palier amortisseur (100) de chocs selon l'une des revendications précédentes.

9. Mouvement horloger comprenant une platine et au moins un pont, ledit au moins un pont comprenant un orifice, **caractérisé en ce que** dans ledit orifice dudit au moins un pont est inséré un palier amortisseur (100) de chocs selon l'une des revendications 1 à 7.

10. Mouvement horloger selon la revendication 8, caractérisé en ce le support (200) du palier amortisseur (100) et ladite platine sont monoblocs.

11. Mouvement horloger selon la revendication 9, caractérisé en ce le support (200) du palier amortisseur (100) et ledit au moins un pont sont monoblocs.

12. Pièce d'horlogerie comprenant une carrure fermée par une boite et un fond, **caractérisé en ce que** ladite pièce d'horlogerie comprend un mouvement horloger selon l'une des revendications 8 à 11.
